# EUROPÄISCHE PATENTSCHRIFT

(11) **EP 0 351 930 B1**
(45) Veröffentlichungstag und Bekanntmachung des Hinweises auf die Patenterteilung: **05.05.1993**
(21) Anmeldenummer: 89250005.9
(22) Anmeldetag: 17.07.1989
(51) Int. Cl.: B23K 3/02

(54) **Lötkolben**
Soldering bit
Fer à souder

(30) Priorität: 21.07.1988 DE 3825048
(43) Veröffentlichungstag der Anmeldung: 24.01.1990
(73) Patentinhaber: ERSA Ernst Sachs KG GmbH & Co., 97877 Wertheim (DE)
(72) Erfinder: Hombrecher, Fritz, D-6980 Wertheim/Main (DE)
(74) Vertreter: Lüke, Dierck-Wilm, Dipl.-Ing.

(56) Entgegenhaltungen:
- DE-C- 3 610 042
- DE-U- 7 926 872
- FR-A- 1 079 740

## Beschreibung

Die Erfindung bezieht sich auf einen Lötkolben mit einem Stielrohr mit einem vorderen Abschnitt und einem hinteren Abschnitt, mit einer Lötspitze, die mittels Gleitsitz auf dem vorderen Abschnitt des Stielrohres aufgesteckt ist, mit einem Federelement, das auf den hinteren Abschnitt des Stielrohres aufgeschoben und dort mit einem Windungsbereich axial festgelegt ist und dessen vorderes Federdrahtende mit einem Haken an der Lötspitze angreift und diese axial gegen den vorderen Abschnitt zieht.

Lötkolben der gattungsgemäßen Art sind aus der DE 36 10 042 C1 vorbekannt. Bei einem solchen Lötkolben wird die Lötspitze mittels des als Zugfeder ausgebildeten Federelementes axial gehalten, wobei die mit einem Fühler versehene Spitze des Stielrohres gegen den Boden der Innenbohrung der Lötspitze gedruckt ist. Bei dem vorbekannten Lötkolben sowie auch bei dem Lötkolben nach der DE 29 13 384 C1 kann sich die Lötspitze gegenüber dem Stielrohr um einen bestimmten Winkel drehen, der durch die Länge des an der Lötspitze angreifenden vorderen Federdrahtendes bestimmt ist. Das hintere Ende der Zugfeder ist mittels mehrerer Federwindungen und enger Passung auf dem Stielrohr festgelegt. Nachteilig hierbei ist, daß die Lötspitze auf dem Stielrohr drehbar ist, so daß sich der eigentliche Arbeitsbereich der Lötspitze beim Löten aus der gewünschten Lötposition herausdrehen kann. Darüber hinaus sind die bekannten Spitzenbefestigungen für dünnwandige und im Durchmesser unter 3 mm liegende hohle Lötspitzen nur bedingt einsetzbar.

Der Erfindung liegt von daher die Aufgabe zugrunde, einen Lötkolben der gattungsgemäßen Art zu schaffen, dessen Lötspitze verdrehsicher am Stielrohr festgelegt ist, wobei die Spitzenbefestigung auch für dünnwandige, hohle Lötspitzen einsetzbar sein soll.

Zur Lösung dieser Aufgabe sieht die Erfindung vor, daß der Durchmesser des vorderen Abschnittes des Stielrohres kleiner ist als der Durchmesser des hinteren Abschnittes des Stielrohres und daß die Lötspitze mit ihrem hinteren freien Rand an die am Übergang zwischen den beiden Abschnitten gebildete Stufe heranragt, wobei im Bereich der Stufe auf dem im Durchmesser kleineren vorderen Abschnitt des Stielrohres mindestens ein Element und im Bereich des hinteren Randes der Lötspitze mindestens ein weiteres Element ausgebildet sind, die zur drehfesten, formschlüssigen Verbindung mit dem Stielrohr ineinandergreifen. Hierbei wird durch die Ausbildung der Stufe zwischen den mit unterschiedlichen Durchmessern ausgebildeten vorderen und hinteren Abschnitten des Stielrohres überhaupt erst die Möglichkeit geschaffen, die Lötspitze formschlüssig mit dem Stielrohr zu verbinden, so daß neben der axialen Festlegung der Lötspitze am Stielrohr mittels des Federelementes auch eine verdrehsichere Befestigung der Lötspitze auf dem den Heizkörper beinhaltenden Stielrohr möglich wird. Hierdurch wird die Spitzenbefestigung auch für dünnwandige und im Durchmesser insbesondere unter 3 mm liegende hohle Lötspitzen einsetzbar.

Die mit der erfindungsgemäßen, verdrehsicheren Spitzenbefestigung erreichbaren besonderen Vorteile bestehen insbesondere darin, daß sich gebogene Spitzen durch den Hebelarm, der sich durch das Abbiegen der Spitzen ergibt, auf dem Stielrohr nicht mehr drehen können, daß der mit oder ohne Fühler ausgebildete, freiliegende Heizkörper nicht mehr durch unsachgemäße Behandlung, insbesondere durch Drehen der Spitze, beschädigt werden kann und daß sich insbesondere dünnwandige, hohle Lötspitzen bei einem Außendurchmesser von 2,5 bis 3,0 mm verdrehsicher halten lassen.

Weitere vorteilhafte Ausgestaltungen der Erfindung ergeben sich aus den Unteransprüchen. Hierbei wird insbesondere auf die Ausbildung eines Hakens an der Lötspitze hingewiesen, wobei der zur Ausbildung des Hakens gebildete Schlitz am freien Rand der Lötspitze mit dem im Bereich der Stufe gebildeten Steg zusammenwirkt, dessen Außenradius kleiner oder gleich ist dem Außenradius des im Durchmesser größeren hinteren Abschnittes des Stielrohres. Hierbei kann die Innenbohrung der Lötspitze mit einer Plustoleranz von 0,1 mm gefertigt werden, da die Lötspitze einer am Haken angreifenden Zugfeder sicher gehalten werden kann. Die Lötspitze ist hierbei leicht und schnell im heißen Zustand auswechselbar. Ein Festzundern wird durch die Plustoleranz der Innenbohurng der Lötspitze verhindert. Bei dem Arbeitsgang zur Herstellung des Hakens am freien Rand der Lötspitze , insbesondere bei einem Schalvorgang , wird gleichzeitig die Nut bzw. der Schlitz zur Aufnahme des als Verdrehsicherung dienenden Steges freigelegt.

Die Erfindung ist nachfolgend anhand eines in den Zeichnungen dargestellten Stielrohres eines Lötkolbens mit Stielrohrträger und Lötspitze näher erläutert. Es zeigen:
- Fig. 1: eine Draufsicht auf das Stielrohr mit Stielrohrträger und aufgesteckter Lötspitze, die von einer Zugfeder gehalten ist,
- Fig. 2: eine Draufsicht auf das Stielrohr mit Stielrohrträger und Heizkörper ,
- Fig. 3: eine vergrößerte Darstellung der Lötspitze in der Lage gemäß Fig. 1 und
- Fig. 4: eine vergrößerte Darstellung der Lötspitze gemäß Fig. 3 in einer um 90° um die Längsachse gedrehten Lage.

Das Stielrohr 1 eines nicht näher dargestellten elektrischen Lötkolbens wird mittels eines Stielrohrträgers 2 am Lötkolbengriff festgelegt. Der vordere Abschnitt 3 des Stielrohres 1 trägt die Lötspitze 4, welche mittels einer Zugfeder 5 als Zugelement auf dem Stielrohr 1 festgelegt ist.

Die Zugfeder 5 weist hierbei gemäß DE 29 13 384 einen auf dem hinteren Abschnitt 6 des Stielrohres 1 mittels einer engen Passung festgelegten Windungsbereich 7 und einen gegenüber dem hinteren Abschnitt 6 des Stielrohres 1 bewegbaren weiteren Windungsbereich 8 auf, der in ein vorderes Federdrahtende 9 übergeht, das in einem Haken 10 endet, der zur axialen Festlegung der Lötspitze 4 an einem Haken 11 der Lötspitze 4 angreift.

Das Stielrohr 1 ist aus zwei Rohrabschnitten 12,13 gebildet, von denen der Rohrabschnitt 13 mit Schiebesitz in den Rohrabschnitt 12 paßt und welche durch Punktschweißen miteinander verbunden sind. Der vordere Rohrabschnitt 13 trägt auf seiner Innenseite einen freiliegenden Heizkörper 14 mit einem Fühler 15 am stirnseitigen, freien Ende. Die Länge des aus dem hinteren Rohrabschnitt 12 herausragenden freien Teils des vorderen Rohrabschnittes 13 und des aus diesem frei herausragenden Heizkörpers 14 mit Fühler 15 ist so bemessen, daß die mit einem Gleitsitz aufgeschobene Lötspitze 4 mit ihrem hinteren, freien Rand 16 nicht ganz bis an die durch die unterschiedlichen Durchmesser20,21 von vorderem und hinteren Abschnitt 3 bzw. 6 des Stielrohres 1 gebildete Stufe 17 heranragt, um einen sicheren Kontakt zwischen der Lötspitze 4 und dem Fühler 15 zu erzielen . Entsprechend ist die nicht näher dargestellte Innenbohrung der Lötspitze 4 freigestochen .

Im Bereich der Stufe 17 ragt ein Steg 18 axial aus dem hinteren Abschnitt 6 des Stielrohres 1 nach vorn über den vorderen Abschnitt 3 des Stielrohres 1, wobei der Steg 18 so bemessen ist, daß dessen äußere Oberfläche innerhalb des Durchmessers 21 des hinteren Abschnittes 6 des Stielrohres 1 liegt, d.h. nicht über dessen Außenkontur herausragt. Somit kann der hintere Windungsteil 7 der Zugfeder 5 frei über den vorderen Abschnitt 3 des Stielrohres 1 und über den Steg 18 geführt und anschließend durch Drehen auf den hinteren Abschnitt 6 des Stielrohres 1 aufgeschoben werden, wobei zwischen dem hinteren Windungsabschnitt 7 der Zugfeder 5 und dem hinteren Abschnitt 6 des Stielrohres 1 eine enge Sitzpassung gebildet ist.

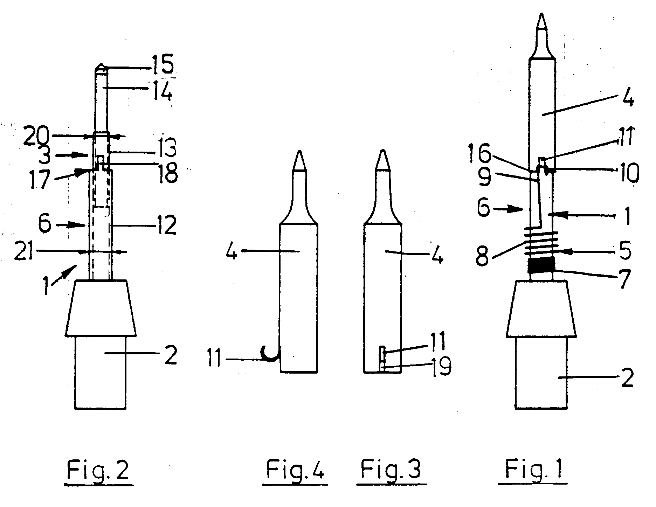

Die Lötspitze 4 ist an ihrem hinteren freien Rand 16 mit einem Schlitz 19 versehen, der achsparallel verläuft. Durch einen Schälvorgang ist das Material des Schlitzes 19 zur Bildung des Hakens 11 nach außen umgebogen, wie es in Fig. 4 dargestellt ist. Der Schlitz 19 hat z.B. eine Breite von 1,0 - 1,5 mm. Beim Aufschieben der Lötspitze 4, welche regelmäßig erst nach dem Aufdrehen der Zugfeder 5 auf den hinteren Abschnitt 6 des Stielrohres 1 aufgesetzt wird, greift der Steg 18 des hinteren Abschnittes 6 des Stielrohres 1 in den Schlitz 19 der Lötspitze 4 ein, wobei der Steg 18 in seiner Breite etwas schmaler als die Breite des Schlitzes 19 bemessen ist. Der Gleitsitz zwischen Lötspitze 4 und Stielrohr 1 ist hierbei gegenüber dem vorderen Abschnitt 3 des Stielrohres 1 gebildet, so daß die Lötspitze 4 mit ihrem inneren Ende der Innenbohrung gegen den Heizkörper 14 bzw.den Fühler 15 stößt und der Steg 18 im Schlitz 19 aufgenommen wird . Durch Einhaken des Hakens 10 der Zugfeder 5 in den Haken 11 der Lötspitze 4 wird anschließend die axiale Sicherung der verdrehsicher gehaltenen Lötspitze 4 bewirkt .

In nicht näher dargestellter Weise kann die Lötspitze 4 auf zwei gegenüberliegenden Seiten mit je einem Schlitz 19 und je einem ausgeformten Haken 11 ausgebildet sein, so daß die Lötspitze 4 bei einseitigem Verschleiß nur um 180 ° gedreht werden muß und sofort wieder einsatzbereit ist.

Außerdem kann das Stielrohr 1 mit seinen beiden Rohrabschnitten 12,13 auch einstückig ausgebildet sein, wobei der hintere Abschnitt 6 des Stielrohres 1 durch Aufweiten bzw. der vordere Abschnitt 3 des Stielrohres 1 durch Verjüngen erzielt werden können. Der Steg 18 wird in beiden Fällen gleichzeitig mitausgebildet .

## Patentansprüche

1. Lötkolben mit einem Stielrohr (1) mit einem vorderen Abschnitt (3) und einem hinteren Abschnitt (6), mit einer Lötspitze (4), die mittels Gleitsitz auf dem vorderen Abschnitt (3) des Stielrohres (1) aufgesteckt ist, mit einem Federelement (5), das auf den hinteren Abschnitt (6) des Stielrohres (1) aufgeschoben und dort mit einem Windungsbereich (7) axial festgelegt ist und dessen vorderes Federdrahtende (9) mit einem Haken (10) an der Lötspitze (4) angreift und diese axial gegen den vorderen Abschnitt (3) zieht,
**dadurch gekennzeichnet,**
daß der Durchmesser (20) des vorderen Abschnittes (3) des Stielrohres (1) kleiner ist als der Durchmesser (21) des hinteren Abschnittes (6) des Stielrohres (1) und daß die Lötspitze (4) mit ihrem hinteren freien Rand (16) an die am Übergang zwischen den beiden Abschnitten (3,6) gebildete Stufe (17) heranragt und daß im Bereich der Stufe (17) auf dem im Durchmesser kleineren vorderen Abschnitt (3) des Stielrohres (1) mindestens ein Element (18) und im Bereich des hinteren Randes (16) der Lötspitze (4) mindestens ein weiteres Element (19) ausgebildet sind, die zur drehfesten, formschlüssigen Verbindung mit dem Stielrohr (1) ineinandergreifen.

2. Lötkolben nach Anspruch 1, dadurch gekennzeichnet, daß das eine Element (18) durch mindestens einen Steg (18) und das weitere Element (19) durch mindestens einen Schlitz (19) gebildet sind.

3. Lötkolben nach Anspruch 1 oder 2, dadurch gekennzeichnet, daß das Stielrohr (1) einstückig ausgebildet ist und daß die Stufe (17) durch Aufweitung des hinteren Abschnittes (6) des Stielrohres (1) bzw. durch Verjüngen des vorderen Abschnittes (3) des Stielrohres (1) gebildet ist.

4. Lötkolben nach Anspruch 1 oder 2, dadurch gekennzeichnet, daß das Stielrohr (1) aus zwei Rohrabschnitten (12,13) gebildet ist, die mit Schiebesitz ineinandergesteckt und miteinander festverbunden sind.

5. Lötkolben nach Anspruch 4, dadurch gekennzeichnet, daß die feste Verbindung durch Punktschweißen oder Hartlöten gebildet ist.

6. Lötkolben nach einem der Ansprüche 2 bis 5, dadurch gekennzeichnet, daß das Material des Schlitzes (19) als Haken (11) nach außen umgebogen ist und daß das Federelement (5) mit einem Haken (10) zur Festlegung am Haken (11) der Lötspitze (4) versehen ist.

7. Lötkolben nach Anspruch 6, dadurch gekennzeichnet, daß auf gegenüberliegenden Seiten des Randes (16) der Lötspitze (4) je ein Schlitz (19) mit Haken (11) ausgebildet ist.

## Claims

1. A soldering iron comprising a rod tube (19) with a front section (3) and a rear section (6), a soldering tip (4) being plugged in a sliding seat onto the front section (3) of the rod tube (1), a spring element (5) being slid onto the rear section (6) of the rod tube (1) and being axially fixed thereat in a winding portion (7) and the front spring end (9) of which engaging over a hook (10) at the soldering tip (4) and pulling the latter axially against the front section (3),
characterized by that the diameter (20) of the front section (3) of the rod tube (1) is smaller than the diameter (21) of the rear section (6) of the rod tube (1), and that the soldering tip (4) extends, by its rear free border (16), to the step (17) formed at the transition between the two sections (3, 6), and that in the area of the step (17), on the smaller-diameter front section (3) of the rod tube (1), at least one member (18) being formed, and in the area of the rear border (16) of the soldering tip (4), at least one additional member (19) being formed, said members (18, 19) engaging into each other for a fixed, positive-linkage connection with the rod tube (1).

2. A soldering iron according to claim 1,
characterized by that the one member (18) is formed by at least one web (18), and the additional member (19) is formed by at least one slot (19).

3. A soldering iron according to claim 1 or 2,
characterized by that the rod tube (1) is formed as one piece and that the step (17) is formed by widening the rear section (6) of the rod tube or by narrowing the front section (3) of the rod tube (19), resp.

4. A soldering iron according to claim 1 or 2,
characterized by that the rod tube (1) is formed of two tube sections (12, 13), slid into each other in a sliding seat and fixedly connected with each other.

5. A soldering iron according to claim 4,
characterized by that the fixed connection is achieved by spot welding or brazing.

6. A soldering iron according to one of claims 2 to 5,
characterized by that the material of the slot (19) is outwardly bent off as a hook (11), and that the spring element (5) is provided with a hook (10) for fixing the hook (11) of the soldering tip (4).

7. A soldering iron according to claim 6,
characterized by that on opposite sides of the border (16) of the soldering tip (4), one slot (19) each with a hook (11) is formed.

## Revendications

1. Fer à souder avec un tube-manche (1) avec un segment antérieur (3) et un segment postérieur (6), avec une panne à souder (4) fixée sur le segment antérieur (3) du tube-manche (1) moyennant un ajustement glissant, avec un élément à ressort (5) glissé sur le segment postérieur (6) du tube-manche (1) et y fixé axialement avec une zone à spires (7) et dont l'extrémité antérieur du fil d'acier (9) agit avec un crochet (10) sur la panne (4) et tire cette dernière axialement contre le segment antérieur (3),
**caractérisé en ce que**
le diamètre (20) du segment antérieur (3) du tube-manche (1) est plus petit que le diamètre (21) du segment postérieur (6) du tube-manche (1) et que la panne (4) approche avec son bord postérieur libre (16) l'épaulement (17) formé à la transition entre les deux segments (3,6) et que dans la zone de l'épaulement (17) au moins un élément (18) est configuré sur le segment antérieur (3) de diamètre plus petit du tube-manche (1) et au moins un autre élément (19) dans la zone du bord postérieur (16) de la panne (4) s'engrénant pour former une liaison résistant à la torsion et à engagement positif avec le tube-manche (1).

2. Fer à souder selon la revendication 1, caractérisé en ce que un élément (18) est formé par au moins une barrette (18) et l'autre élément (19) par au moins une fente (19).

3. Fer à souder selon la revendication 1 ou 2, caractérisé en ce que le tube-manche (1) est formé d'une pièce et que l'épaulement (17) est formé par évasement du segment postérieur du tube-manche (1) ou par amincissement du segment antérieur (3) du tube-manche (1).

4. Fer à souder selon la revendication 1 ou 2, caractérisé en ce que le tube-manche (1) est formé de deux segments de tubes (12,13) assemblés par ajustement appuyé et reliés à demeure.

5. Fer à souder selon la revendication 4, caractérisé en ce que la liaison fixe est formée par une soudure par points ou brasage fort.

6. Fer à souder selon une des revendications 2 à 5, caractérisé en ce que le matériau de la fente (19) est plié vers l'extérieur pour former un crochet (11) et que l'élément à ressort (5) est muni d'un crochet (10) pour la fixation sur le crochet (11) de la panne (4).

7. Fer à souder selon la revendication 6, caractérisé en ce que sur des côtés opposés du bord (16) de la panne (4) sont formés une fente (19) avec crochet (11).
